# EUROPÄISCHE PATENTSCHRIFT

(11) **EP 2 088 409 B1**
(45) Veröffentlichungstag und Bekanntmachung des Hinweises auf die Patenterteilung: **25.06.2014**
(21) Anmeldenummer: 09001623.9
(22) Anmeldetag: 05.02.2009
(51) Int. Cl.: G01J 3/02, G01J 3/14, G01J 3/28

(54) **Abbildendes Spektrometer, insbesondere für die Fernerkundung**
Display spectrometer, in particular for remote investigation
Spectromètre représentatif, notamment pour la reconnaissance à distance

(30) Priorität: 06.02.2008 DE 102008007783
(43) Veröffentlichungstag der Anmeldung: 12.08.2009
(73) Patentinhaber: Erwin Kayser-Threde GmbH, 81379 München (DE)
(72) Erfinder: Kaiser, Stefan, Dr., 80339 München (DE)
(74) Vertreter: Prüfer & Partner GbR European Patent Attorneys

(56) Entgegenhaltungen:
- EP-A1- 1 387 154
- WO-A1-98/37389
- DE-C- 521 487
- US-A- 5 859 702
- US-A1- 2005 174 583
- LOBB D R: "Imaging spectrometers using concentric optics" PROCEEDINGS OF SPIE - THE INTERNATIONAL SOCIETY FOR OPTICAL ENGINEERING - IMAGING SPECTROMETRY III 1997 SPIE US, Bd. 3118, 1997, Seiten 339-347, XP002525333
- KAISER S ET AL: "Compact prism spectrometer of pushbroom type for hyperspectral imaging" PROCEEDINGS OF SPIE - THE INTERNATIONAL SOCIETY FOR OPTICAL ENGINEERING - OPTICAL DESIGN AND ENGINEERING III 2008 SPIE US, Bd. 7100, 2008, XP002525334

## Beschreibung

Die Erfindung betrifft ein abbildendes Spektrometer, insbesondere für die Fernerkundung.

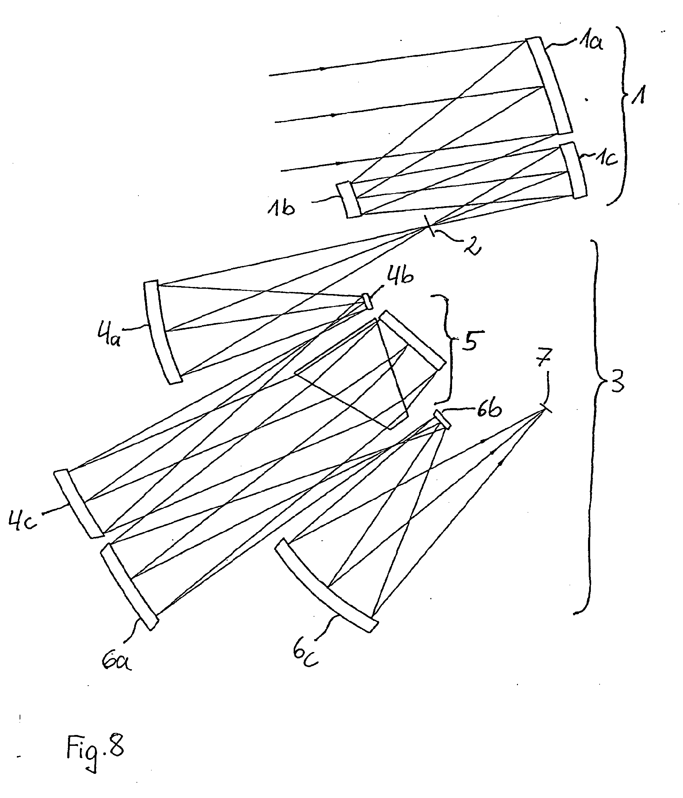

Eine der Anmelderin bekannte Anordnung für abbildende Spektrometer in der luftfahrzeug- und weltraumgestützten optischen Fernerkundung ist in Fig. 8 dargestellt. Die Anordnung beinhaltet ein mehrere Spiegel 1a, 1b, 1c aufweisendes Teleskop 1, einen Spalt 2 und ein Spektrometer 3. Das Spektrometer 3 beinhaltet üblicherweise einen Kollimator 4a, 4b, 4c zum Erzeugen von parallelem Licht, eine Prismenanordnung 5 und einen Dekollimator 6a, 6b, 6c, der das Bild auf einen Detektor 7 fokussiert. Der Detektor 7 ist als Matrixdetektor, z.B. als CCD-Kamera mit einer Mehrzahl von Zeilen und Spalten ausgebildet. Das Teleskop 1 kann beispielsweise in einem Satelliten untergebracht sein, der sich über den Erdboden in einer vorbestimmten Bewegungsrichtung bewegt. Ein Bild eines Bereichs des Erdbodens wird mit dem Teleskop 1 abgebildet und mittels des Spalts 2 ein schmaler Streifen des Bereichs ausgewählt. Dieser Streifen wird auf einer Zeile des Matrixdetektors 7 abgebildet. Mit Hilfe des dazwischen geschalteten Spektrometers 3 wird zusätzlich das Licht in die zweite Dimension (in Bewegungsrichtung des Satelliten) spektral zerlegt und simultan aufgezeichnet. Durch die Flugbewegung des Satelliten läßt sich somit bei ausreichend schneller Belichtung und Auslesung des Matrixdetektors ein zusammenhängendes, simultan in seine spektralen Anteile zerlegtes Bild vom überflogenen Gebiet erstellen.

Die spektrale Zerlegung erfolgt in dem in Fig. 8 dargestellten Beispiel durch ein Prisma mit planen Flächen. Es sind jedoch verschiedene Ausführungen abbildender Spektrometer bekannt.

Zum Beispiel ist in X. Prieto-Blanco et al., Analytical Design of an Offner Imaging Spektrometer, OPTICS EXPRESS, Vol. 14, No. 20, 2. Oktober 2006, S. 9156-9168 eine Offner-Konfiguration für ein abbildendes Spektrometer beschrieben. Diese besteht aus einem Spalt, zwei konkaven Spiegeln und einem dazwischen angeordneten auf einem konvexen Spiegel aufliegenden Beugungsgitter. Dieses Spektrometer hat einen konzentrischen Aufbau und damit eine kompakte Bauweise, sowie geringe Abbildungsfehler. Aufgrund der geringen Beugungseffizienz des Gitters, insbesondere bei Instrumenten mit hoher spektraler Bandbreite, bestehen jedoch hohe Transmissionsverluste. Ferner ist die Transmission polarisationsabhängig. Darüber hinaus kommt es zu Streulicht am Gitter und zu Geisterbildern aufgrund höherer Beugungsordnungen bzw. Mehrfachbeugung.

Ein herkömmliches Prismenspektrometer besitzt eine Prismenanordnung 5, wie sie in Fig. 8 gezeigt ist, die ein Einzelprisma oder eine Prismenkombination mit planen Stirnflächen aufweist. Im Gegensatz zum Offner-Spektrometer besteht eine höhere Transmission über einen breiten Spektralbereich bei gleichzeitig geringerer Polarisationsempfindlichkeit. Diese Spektrometeranordnung ist geeignet für Systeme mit hohen Anforderungen an Streulicht. Nachteile sind durch die nichtlineare Dispersionscharakteristik und durch Verzeichnungsfehler wie Smile und Keystone gegeben. Insbesondere letztgenannte Effekte bereiten beim satellitengestützen Einsatz zur Erdbeobachtung oft große Probleme. Aufgrund der relativ großen Abmessungen hat dieses Spektrometer auch ein zu großes Gewicht, was bei Anwendungen auf Satelliten ungünstig ist.

Eine kompaktere Bauweise weisen Prismenspektrometer mit gekrümmten Prismenflächen auf. Aus der WO 98/37389 ist ein abbildendes Spektrometer bekannt, welches drei gekrümmte reflektierende Oberflächen und einen optischen Pfad zwischen dem Objekt und dem Bild aufweist, der Reflexionen an den drei gekrümmten reflektierenden Oberflächen beinhaltet. Das Spektrometer beinhaltet weiterhin Dispersionselemente mit gekrümmten Oberflächen. Dieses Spektrometer weist ein konzentrisches Design ähnlich dem Offner-Spektrometer auf.

Die Größe des Spektrometers wird im Allgemeinen bestimmt durch die geforderte Größe der spektralen Aufspaltung am Detektor und den Anforderungen an deren Linearität. Das bekannte Spektrometer kann mit kleineren Abmessungen gebildet werden als ein Prismenspektrometer mit planen Prismenoberflächen. Die Abmessungen sind jedoch größer als bei vergleichbaren Offner-Spektrometern mit Gitter.

US-A-5859702 beschreibt eine Vorrichtung zur Spektralanalyse, wobei durch ein Beugungsgitter die Spektralordnungen voneinander getrennt werden. Dabei werden in dem optischen Pfad zwei doppelt durchlaufene Prismen sowie ein Beugungsgitter dazwischen angeordnet.

DE 521 487 C beschreibt einen Doppelmonochromator, der es ermöglicht, mit einer Anordnung aus einer Spaltplatte, Linsen und Prismen Streustrahlung sowie Strahlung ungewünschter Wellenlänge auszufiltern.

In LOBB DR: "Imaging spectrometers using concentric optics" proceedings of SPIE - the international society for optical engineering - imaging spectrometry III, 1997, SPIE US, Bd. 3118, 1997, Seiten 339 - 347, XP002525333 wird ein abbildendes Spektrometer beschrieben, dass in einer Offner-Konfiguration angeordnet ist und zwei Prismen aufweist, zwischen denen ein Spiegel angeordnet ist.

Aus der US 5,781,290 ist ein abbildendes Spektrometer vom konzentrischen Offner-Typ bekannt, bei dem das herkömmliche Beugungsgitter durch ein oder mehrere gekrümmte Prismen ersetzt ist. Die gekrümmten Prismen sind als Fery-Prismen bekannt.

Es ist Aufgabe der Erfindung, ein abbildendes Spektrometer, insbesondere für die optische Fernerkundung, bereitzustellen, welches eine kompakte und leichte Bauweise mit einer hohen Transmission, einer geringen Verzeichnung und einer großen Dispersion verbindet.

Die Aufgabe wird gelöst durch ein abbildendes Spektrometer gemäß Patentanspruch 1 und durch ein Spektrometer, insbesondere für die Fernerkundung, gemäß Patentanspruch 9. Weiterbildungen der Erfindung sind in den Unteransprüchen angegeben.

Die Erfindung hat den Vorteil, daß ähnlich der annähernd konzentrischen Spiegel einer Offner-Konfiguration eine 1:1-Abbildung möglich wird, ohne die Nachteile eines Beugungsgitters zu haben.

Es ist eine deutliche Reduzierung des Bauraums und des Gewichts gegenüber Prismenspektrometern mit planen Prismenflächen, sowie eine Reduzierung der Komplexität im Hinblick auf die bekannten abbildenden Prismenspektrometer möglich, da lediglich ein Spiegel und zwei verspiegelte Prismen erforderlich sind.

Abbildungsfehler wie Smiles und Keystones sind deutlich reduziert.

Die Erhöhung der spektralen Aufspaltung im Vergleich zu den bekannten Prismenspektrometern mit gekrümmten Prismenoberflächen wird durch eine Vergrößerung der Abstände zwisehen dem Eintrittsspalt und dem erstem Prisma und zwischen dem zweitem Prisma und dem Detektor sowie durch den doppelten Durchgang durch die Prismen möglich.

Weitere Merkmale und Zweckmäßigkeiten ergeben sich aus der Beschreibung von Ausführungsbeispielen anhand der Figuren.

Von den Figuren zeigen:
Fig. 1 eine erste Ausführungsform des abbildenden Spektrometers.
Fig. 2 eine Abwandlung eines Details der ersten Ausführungsform.
Fig. 3 eine zweite Ausführungsform des abbildenden Spektrometers.
Fig. 4 ein Detail von Fig. 3.
Fig. 5 eine Abwandlung des Details von Fig. 4.
Fig. 6 eine dritte Ausführungsform des abbildenden Spektrometers.
Fig. 7 eine vierte Ausführungsform des abbildenden Spektrometers.
Fig. 8 eine Teleskop- und Spektrometer-Anordnung, insbesondere für die Fernerkundung.

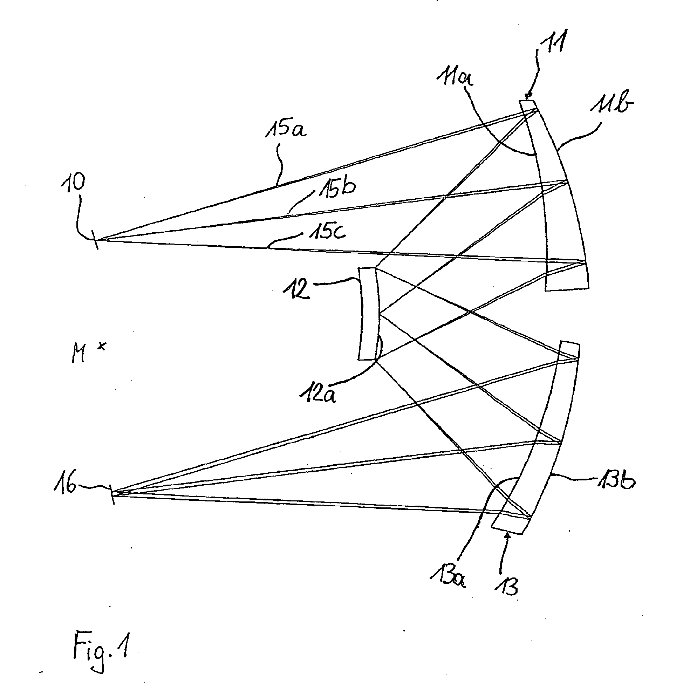

Eine in Fig. 1 gezeigte erste Ausführungsform des abbildenden Spektrometers beinhaltet einen Spalt 10, der die Objektebene bildet. Ferner beinhaltet es ein erstes gekrümmtes Prisma 11, welches eine konkav gekrümmte Fläche 11 a und eine konvex gekrümmte Fläche 11b aufweist und welches relativ zu dem Spalt 10 so angeordnet ist, daß die konkav gekrümmte Fläche 11a dem Spalt zugewandt ist. Weiter beinhaltet es einen Spiegel 12 mit einer konvex gekrümmten Oberfläche 12a, der so angeordnet ist, daß die konvex gekrümmte Oberfläche 12a der konkaven Fläche 11 a des ersten gekrümmten Prismas 11 zugewandt ist. Weiter ist ein zweites gekrümmtes Prisma 13 mit einer konkaven Fläche 13a und einer konvexen Fläche 13b vorgesehen, das so relativ zu dem Spalt 10 bzw. zu dem Spiegel angeordnet ist, daß die konkave Fläche 13a der konvexen Fläche 12a des Spiegels 12 bzw. dem Spalt 10 zugewandt ist. Die konvexen Flächen 11b bzw. 13b des ersten bzw. zweiten gekrümmten Prismas sind jeweils verspiegelt.

Das erste gekrümmte Prisma 11, der gekrümmte Spiegel 12 und das zweite gekrümmte Prisma 13 definieren einen optischen Pfad. Vom Spalt 10 ausgehende Lichtstrahlen 15a, 15b, 15c etc. treffen auf die konkave Fläche 11 a des ersten gekrümmten Prismas auf, durchqueren das Prisma 11, werden an der verspiegelten Rückseite 11b des Prismas reflektiert und durchlaufen somit das Prisma in einem zweiten Durchgang. Beim Ein- und Austritt aus dem Prisma tritt eine Aufspaltung der spektralen Bestandteile der Lichtstrahlen auf. Die so reflektierten Strahlen treffen auf die konvexe Fläche 12a des gekrümmten Spiegels 12 auf, werden an dieser so reflektiert, daß sie auf die konkave Fläche 13a des zweiten gekrümmten Prismas 13 auftreffen, dort wiederum das zweite Prisma durchlaufen und an der verspiegelten Rückseite 13b reflektiert werden, so daß sie auch das zweite Prisma in einem zweiten Durchgang mit weiterer spektraler Aufspaltung durchlaufen, bis sie auf eine Bildfläche 16 fokussiert werden, in der sie ein spektral zerlegtes Bild des Spalts 10 bilden.

Die gekrümmten Flächen der Prismen und/oder des Spiegels sind vorzugsweise sphärisch gekrümmt.

Die Prismen sind vorzugsweise so angeordnet, daß die Krümmungsmittelpunkte der konvexen Rückseiten 11b, 13b im Wesentlichen zusammenfallen oder nahe beieinander liegen. Ferner ist die konvexe Fläche 12a des gekrümmten Spiegels 12 vorzugsweise so angeordnet, daß ihr Krümmungsmittelpunkt im Wesentlichen mit den Krümmungsmittelpunkten der Reflexionsflächen der Prismen zusammenfällt oder nahe bei diesen liegt. Wie insbesondere aus Fig. 1 ersichtlich ist, sind das Zentrum des Spaltes 10, die Krümmungsmittelpunkte der reflektierenden Flächen 12a, 11b, 13b sowie das Zentrum des Spaltbildes 16 im Wesentlichen entlang einer Linie angeordnet und der Spiegel 12 hat in radialer Richtung der Krümmung gesehen einen kleineren Abstand von der Linie als die Prismen. Dadurch ergibt sich ähnlich wie bei der Offner-Konfiguration im Wesentlichen eine 1:1-Abbildung mit nur geringen Abbildungsfehlern, wie sphärischer Aberration, Koma, Astigmatismus, Bildfeldkrümmung und Verzeichnung.

Das abbildende Spektrometer gemäß der ersten Ausführungsform weist lediglich drei optische Elemente auf. Dadurch ist die Komplexität reduziert. Ferner ist der Bauraum und das Gewicht gegenüber den bekannten Prismenspektrometern reduziert.

Wenn das abbildende Spektrometer zur optischen Fernerkundung zusammen mit einem Teleskop in einem Satelliten eingesetzt wird, sind die Prismen vorzugsweise aus strahlungshartem Glas gebildet.

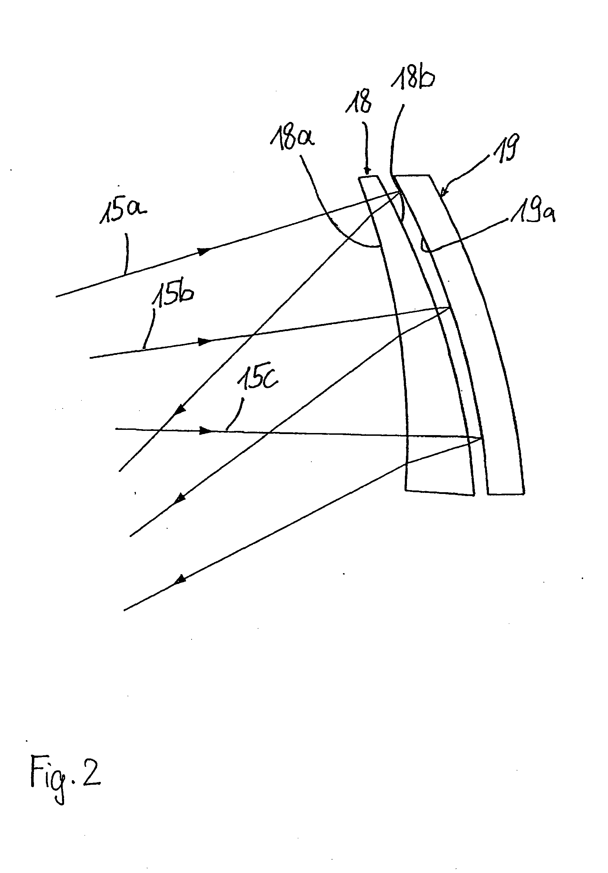

Fig. 2 zeigt eine nicht erfindungsgemäße Abwandlung, wobei nur eines der gekrümmten Prismen dargestellt ist. Anstelle des ersten gekrümmten Prismas 11 mit verspiegelter Rückseite 11b ist ein gekrümmtes Prisma 18 mit konkaver Vorderfläche 18a und konvexer Rückfläche 18b vorgesehen, das ähnlich zu dem Prisma 11 ausgebildet ist, jedoch keine verspiegelte Rückfläche 18b aufweist. Zum Reflektieren des hindurchgehenden Lichtstrahls 15a, 15b, 15c ist hinter dem Prisma 18 ein gekrümmter Spiegel 19 angeordnet, dessen konkav gekrümmte Oberfläche 19a der konvexen Fläche 18b des Prismas zugewandt ist. Vorzugsweise ist die Spiegelfläche 19a sphärisch gekrümmt. Der Spiegel 19 kann unmittelbar hinter dem Prisma angeordnet sein oder von dem Prisma durch einen kleinen Spalt getrennt angeordnet sein. Um einen symmetrischen Aufbau zu erhalten, ist das in Fig. 1 gezeigte zweite gekrümmte Prisma 13 ebenfalls durch eine Kombination aus nichtverspiegeltem Prisma und Spiegel ersetzt. Es sind auch Abwandlungen möglich, in denen lediglich eines der Prismen 11 und 13 durch eine Kombination aus nichtverspiegeltem Prisma und Spiegel ersetzt wird.

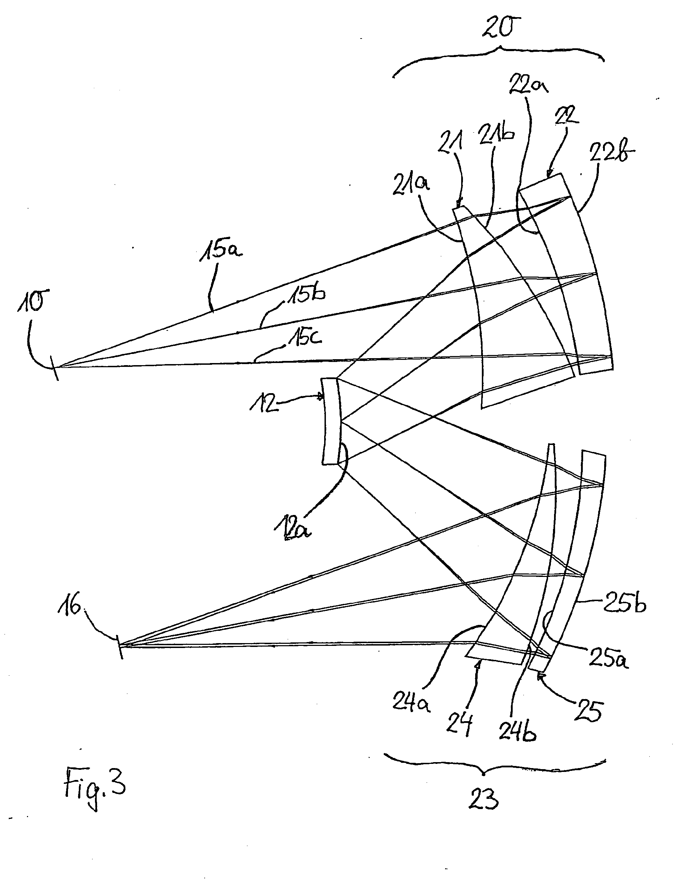

Fig. 3 zeigt eine zweite Ausführungsform des abbildenden Spektrometers. Elemente, die identisch sind zu der in Fig. 1 gezeigten ersten Ausführungsform, sind mit den gleichen Bezugszeichen versehen und ihre Beschreibung wird nicht wiederholt. Im Unterschied zur ersten Ausführungsform weist das abbildende Spektrometer gemäß der zweiten Ausführungsform anstelle des ersten und des zweiten gekrümmten Prismas jeweils ein erstes Doppelprisma 20 und ein zweites Doppelprisma 23 auf, die so angeordnet sind, daß sie der Funktion des ersten Prismas und des zweiten Prismas gemäß der ersten Ausführungsform entsprechen. Das erste Doppelprisma 20 weist ein erstes gekrümmtes Prisma 21 mit einer konkaven Fläche 21 a und einer konvexen Fläche 21 b auf. Das erste Prisma 21 ist so angeordnet, daß die konkave Fläche 2 1 a dem Spalt 10 zugewandt ist. Anschließend an die konvexe Fläche 21b ist ein zweites gekrümmtes Prisma 22 mit einer konkaven Fläche 22a und einer konvexen Fläche 22b vorgesehen. Die konvexe Fläche 22b ist verspiegelt, so daß Lichtstrahlen, die das erste Prisma 21 durchqueren auf das zweite Prisma 22 fallen, dieses durchqueren und an der verspiegelten Rückseite 22b reflektiert werden, so daß jedes der Prismen zweimal durchlaufen wird. Durch den insgesamt vierfachen Durchgang läßt sich die Dispersion weiter erhöhen.

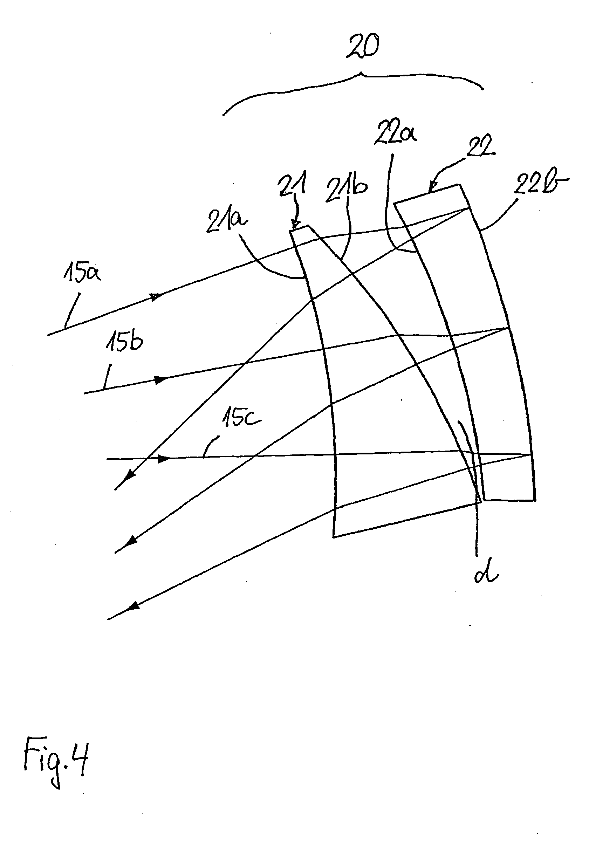

Wie aus der vergrößerten Darstellung von Fig. 4 ersichtlich ist, können die Prismen unmittelbar hintereinander oder mit Luftspalt d angeordnet sein. Falls sie unmittelbar hintereinander angeordnet sind, können sie auch aneinander gekittet sein. Die Prismen können aus dem gleichen Material oder aus unterschiedlichem Material, beispielsweise aus verschiedenen Gläsern ausgebildet sein. Damit lassen sich spezifische Eigenschaften wie z.B. die Linearität der Dispersion einstellen.

Das zweite Doppelprisma 23 ist entsprechend ausgebildet und weist ein erstes gekrümmtes Prisma 24 mit einer konkaven Fläche 24a und einer konvexen Fläche 24b und dahinter ein zweites gekrümmtes Prisma 25 mit einer konkaven Fläche 25a und einer konvexen Fläche 25b auf, die so angeordnet sind, daß die konvexe Fläche 24b des ersten Prismas der konkaven Fläche 25a des zweiten Prismas 25 gegenüber liegt. Die konvexe Fläche 25b des zweiten Prismas ist verspiegelt.

Mit den Doppelprismen 20, 23 lassen sich insbesondere Abbildungsfehler weiter korrigieren und die Linearität und Verzeichnung verbessern.

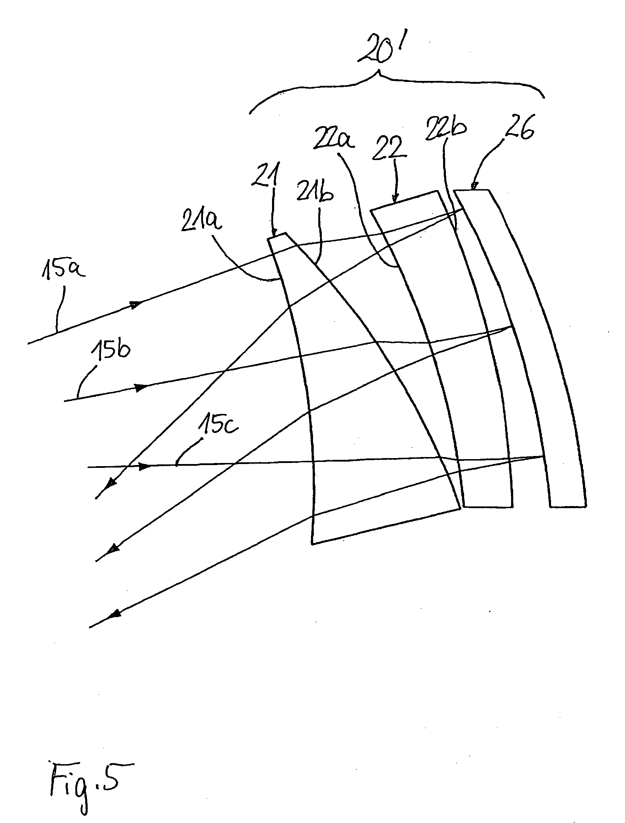

Anstelle des zweiten Prismas 22 bzw. 25 des Doppelprismas 20 bzw. 23, welches eine verspiegelte Rückfläche hat, kann in einer nicht erfindungsgemäßen Ausführung auch ein transparentes zweites Prisma und ein zusätzlicher Spiegel verwendet werden, wie in Fig. 5 dargestellt ist. Anstelle eines Doppelprismas kann auch eine Kombination von drei oder mehr hintereinander angeordneten Einzelprismen verwendet werden.

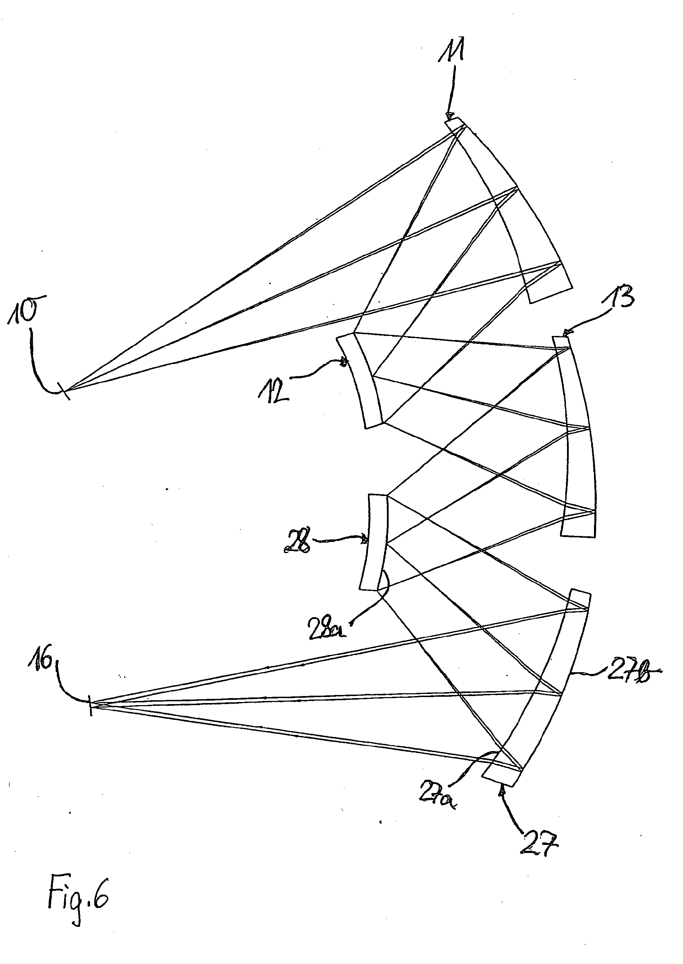

In Fig. 6 ist eine dritte Ausführungsform des abbildenden Spektrometers dargestellt. Elemente, die gleich sind zu der ersten Ausführungsform sind mit den gleichen Bezugszeichen versehen und ihre Beschreibung wird nicht wiederholt. Das abbildende Spektrometer gemäß der dritten Ausführungsform unterscheidet sich von dem abbildenden Spektrometer gemäß der ersten Ausführungsform dadurch, daß zusätzlich ein drittes gekrümmtes Prisma 27 mit einer konkaven Fläche 27a und einer konvexen verspiegelten Rückfläche 27b und ein zweiter Spiegel 28 mit einer konvexen Fläche 28a vorgesehen ist. Das dritte gekrümmte Prisma 27 und der zweite Spiegel 28 sind derart angeordnet, daß die aus dem zweiten gekrümmten Prisma 13 austretenden Lichtstrahlen über die gekrümmte Fläche 28a des zweiten Spiegels auf das dritte gekrümmte Prisma 27 reflektiert werden, welches sie zweimal durchqueren, wobei sie an der verspiegelten Rückseite 27b reflektiert werden, bis sie auf die Bildfläche 16 auftreffen. Vorzugsweise sind die gekrümmten Flächen sphärisch. Die gekrümmten Spiegelflächen und die verspiegelten Rückseiten sind vorzugsweise so angeordnet, daß ihre Krümmungsmittelpunkte nahe beieinander liegen. Somit wird eine symmetrische Anordnung mit hoher Dispersion erreicht.

Die gekrümmten Prismen mit verspiegelter Rückseite der dritten Ausführungsform können auch ersetzt werden durch Prismen-Spiegel-Kombinationen, wie in Fig. 2 dargestellt bzw. durch Doppelprismen mit verspiegelter Rückseite wie in Fig. 4 dargestellt oder Doppelprismen-Spiegel-Kombinationen wie in Fig. 5 dargestellt oder Mehrfachprismen-Kombinationen.

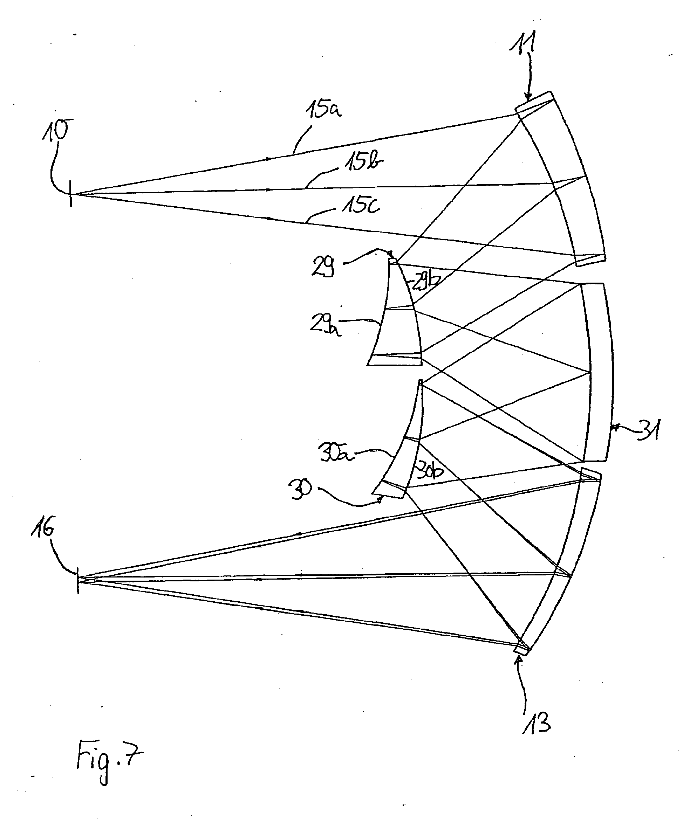

Fig. 7 zeigt eine vierte Ausführungsform des abbildenden Spektrometers. Elemente, die gleich sind zu der ersten bzw. den vorhergehenden Ausführimgsformen sind mit den gleichen Bezugszeichen versehen, und eine detaillierte Beschreibung derselben wird nicht wiederholt. Anstelle der gekrümmten Spiegel 12, 28 der dritten Ausführungsform sind ein drittes gekrümmtes Prisma 29 und ein viertes gekrümmtes Prisma 30 vorgesehen. Das dritte gekrümmte Prisma 29 weist eine konkave Fläche 29a und eine konvexe Fläche 29b auf, wobei das Prisma so angeordnet ist, daß die konvexe Fläche 29b der konkaven Fläche 11a des ersten gekrümmten Prismas 11 zugewandt ist. Die konkave Rückfläche 29a des dritten gekrümmten Prismas ist verspiegelt. Das vierte gekrümmte Prisma 30 weist ebenfalls eine konkave Fläche 30a und eine konvexe Fläche 30b auf, wobei die konvexe Fläche 30b der konkaven Fläche 13a des zweiten gekrümmten Prismas 13 zugewandt ist und die konkave Fläche 30a verspiegelt ist. Anstelle des mittleren gekrümmten Prismas 13 in Fig. 6 ist ein gekrümmter Spiegel 31 vorgesehen, dessen konkav gekrümmte Fläche 31 a den konvexen Flächen 29b bzw. 30b des dritten und des vierten gekrümmten Prismas zugewandt ist.

Vorzugsweise sind auch bei der vierten Ausführungsform die gekrümmten reflektierenden Flächen so angeordnet, daß ihre Krümmungsmittelpunkte aufeinander fallen bzw. nahe beieinander liegen. Damit wird ein symmetrischer Aufbau erzielt, der Abbildungsfehler reduziert.

Abwandlungen dieser Ausführungsform sind ebenfalls möglich. Die Prismen mit verspiegelten Rückseiten können jeweils durch Prismen-Kombinationen ersetzt werden.

Ein Spektrometer für die optische Fernerkundung beinhaltet ein abbildendes Spektrometer gemäß einer der zuvor beschriebenen Ausführungsformen und ein Teleskop 1, das beispielsweise in Fig. 8 dargestellt ist. Als Detektor wird üblicherweise eine CCD-Kamera verwendet.

## Patentansprüche

1. Abbildendes Spektrometer zum Erzeugen eines spektral aufgelösten Bildes, mit
einem Spalt (10) zum Hindurchlassen des von einem Objekt ausgehenden Lichts,
einem optischen Pfad für durch den Spalt hindurchgehende Lichtstrahlen, wobei der optische Pfad nacheinander aufweist:
erstes Prisma (11, 22) zum Erzeugen einer spektralen Aufspaltung eines hindurchgehenden Lichtstrahls, wobei die stromabwärts im optischen Pfad gelegene Oberfläche (11b; 22b) des ersten Prismas verspiegelt ist, so dass die Lichtstrahlen an der verspiegelten Oberfläche des ersten Prismas reflektiert werden und das erste Prisma mit weiterer spektraler Aufspaltung in einem zweiten Durchgang durchlaufen;
wenigstens einen Spiegel (12) mit gekrümmter Oberfläche (12a) zum Reflektieren eines von dem ersten Prisma (11, 22) zurückkommenden Lichtstrahls, und
wenigstens ein zweites Prisma (13, 25), auf das das von dem Spiegel (12) reflektierte Licht gelenkt ist, zum Erzeugen der weiteren spektralen Aufspaltung eines Lichtstrahls, wobei die stromabwärts im:optischen Pfad gelegene Oberfläche (13b; 25b) des zweiten Prismas verspiegelt ist, so dass die Lichtstrahlen an der verspiegelten Oberfläche des zweiten Prismas reflektiert werden und das zweite Prisma mit weiterer spektraler Aufspaltung in einem zweiten Durchgang durchlaufen, bis sie auf eine Bildfläche (16) fokussiert werden, in der sie ein spektral zerlegtes Bild des Spalts (10) bilden,
wobei jedes Prisma zwei gekrümmte Oberflächen aufweist und das Zentrum des Spaltes (10), die Krümmungsmittelpunkte der reflektierenden Flächen (12a, 11b, 13b), sowie das Zentrum des Spaltbildes (16) im Wesentlichen entlang einer Linie angeordnet sind.

2. Abbildendes Spektrometer nach Anspruch 1, wobei wenigstens eines der Prismen als Doppelprisma (20; 23) ausgebildet ist.

3. Abbildendes Spektrometer nach einem der Ansprüche 1 bis 2, wobei die Prismen sphärisch gekrümmte Flächen aufweisen.

4. Abbildendes Spektrometer nach einem der Ansprüche 1 bis 3, wobei der Spiegel (12) ebenfalls sphärisch gekrümmte Flächen aufweisen.

5. Abbildendes Spektrometer nach einem der Ansprüche 1 bis 4, wobei die Krümmungsmittelpunkte der reflektierenden Flächen nach Art einer Offner-Konfiguration im Wesentlichen zusammenfallen.

6. Abbildendes Spektrometer nach einem der Ansprüche 1 bis 5, wobei n Prismen (11, 13, 28) und n-1 im optischen Pfad zwischen diesen liegende Spiegel (12, 28), vorzugsweise 3 Prismen und zwei Spiegel, in einer Offner-Konfiguration vorgesehen sind.

7. Abbildendes Spektrometer nach einem der Ansprüche 1 bis 6, wobei zwei Prismen (11, 13) und ein Spiegel (31) und zwei als Dispersionselemente ausgebildete Reflexionseinrichtungen (29, 30) in einer offner-Konfiguration vorgesehen sind.

8. Abbildendes Spektrometer nach einem der Ansprüche 1 bis 7, wobei die Reflexionseinrichtung (12; 28) in radialer Richtung der Krümmung gesehen einen kleineren Abstand von der Linie hat als die Dispersionseinrichtung.

9. Spektrometer, insbesondere für die Fernerkundung mit einem Teleskop und einem abbildenden Spektrometer nach einem der Ansprüche 1 bis 8.

10. Spektrometer nach Anspruch 9, weiter mit einem Matrixdetektor zum spektralsensitiven Erkennen des Bildes.

## Claims

1. Imaging spectrometer for generating an image with spectral resolution, having
a slit (10) for allowing light emitted by an object to pass through,
an optical path for light beams passing through the slit, wherein the optical path comprises consecutively:
a first prism (11, 22) for generating a spectral dispersion of a light beam passing therethrough, wherein the surface (11b; 22b) of the first prism that is located downstream in the optical path is mirrored, so that light beams are reflected by the mirrored surface of the first prism and pass through the first prism with further spectral dispersion in a second pass;
at least one mirror (12) with a curved surface (12a) for reflecting a light beam returning from the first prism (11, 22), and
at least a second prism (13, 25), on which the light reflected by the mirror (12) is directed, for generating the further spectral dispersion of a light beam, wherein the surface (13b; 25b) of the second prism that is located downstream in the optical path is mirrored, so that the light beams are reflected at the mirrored surface of the second prism and pass through the second prism with further spectral dispersion in a second pass until they are focused onto an image area (16) where they form a spectrally dispersed image of the slit (10),
wherein each prism comprises two curved surfaces and a center of the slit (10), the centers of the curvature of the reflecting surfaces (12a, 11b, 13b), and the center of the image of the slit (16) are arranged substantially along a line.

2. Imaging spectrometer according to claim 1, wherein at least one of the prisms is formed as a double prism (20; 23).

3. Imaging spectrometer according to one of claims 1 to 2, wherein the prisms comprise spherically-curved surfaces.

4. Imaging spectrometer according to one of claims 1 to 3, wherein the mirror (12) comprises also spherically-curved surfaces.

5. Imaging spectrometer according to one of claims 1 to 4, wherein the centers of the curvature of the reflecting surfaces are substantially coincident in the manner of an Offner-configuration.

6. Imaging spectrometer according to one of claims 1 to 5, wherein n prisms (11, 13, 28) and n-1 mirrors (12, 28) located in between them in the optical path, preferably 3 prisms and two mirrors, are provided in an Offner-configuration.

7. Imaging spectrometer according to one of claims 1 to 6, wherein two prisms (11, 13) and one mirror (31) and two reflection devices (29, 30) being formed as dispersion elements are provided in an Offner-configuration.

8. Imaging spectrometer according to one of claims 1 to 7, wherein the reflection device (12; 28) has, seen in a radial direction of the curvature, a smaller distance from the line than the dispersion device.

9. Spectrometer, in particular for remote sensing, with a telescope and an imaging spectrometer according to one of claims 1 to 8.

10. Spectrometer according to claim 9, further comprising a matrix detector for detecting the image in a spectrally sensitive manner.

## Revendications

1. Spectromètre imageur à engendrer une image à résolution spectrale, comprenant
- une fente (10) à laisser passer la lumière provenant d'un objet,
- un parcours optique pour les rayons lumineux passant à travers ladite fente, ce parcours optique comprenant en suite:
- un premier prisme (11, 22) à générer une dispersion spectrale d'un rayon lumineux y passant, la surface (11 b; 22b) du premier prisme, qui se trouve en aval dans ledit parcours optique, étant étamée d'une telle façon, que les rayons lumineux soient réfléchi à ladite surface étamée dudit premier prisme et passent par ledit premier prisme à dispersion spectrale ultérieure au cours d'un deuxième passage;
- au moins un miroir (12) à surface incurvée (12a) afin de réfléter un rayon lumineux retournant dudit premier prisme (11, 22), et
- au moins un deuxième prisme (13, 25), sur lequel la lumière réfletée par ledit miroir (12) est guidée, à générer la dispersion spectrale ultérieure, la surface (13b; 25b) dudit deuxième prisme, qui se trouve en aval dans ledit parcours optique, étant étamée d'une telle façon, que les rayons lumineux soient réflétés à ladite surface étamée dudit deuxième prisme et passent par ledit deuxième prisme à dispersion spectrale ultérieure au cours d'un deuxième passage jusqu'à leur focalisation sur un champ d'image (16), dans lequel ils représentent une image spectralément dispersée de ladite fente (10),
- dans lequel chaque prisme présente deux surfaces incurvées et le centre de ladite fente (10), les centres de courbure desdites surfaces réfléchissantes (12a, 11 b, 13b) ainsi que le centre de l'image de fente (16) sont disposées essentiellement le long d'une ligne.

2. Spectromètre imageur selon la revendication 1, **caractérisé en ce qu'**au moins un desdits prismes est conçu sous forme d'un prisme jumelé (20; 23).

3. Spectromètre imageur selon une quelconque des revendications 1 à 2, dans lequel lesdits prismes présente des surfaces à courbure sphérique.

4. Spectromètre imageur selon une quelconque des revendications 1 à 3, **caractérisé en ce que** ledit miroir (12) présente également des surfaces à courbure sphérique.

5. Spectromètre imageur selon une quelconque des revendications 1 à 4, dans lequel les centres de courbure desdits surfaces réfléchissantes sont coïncidentes essentiellement de façon d'une configuration Offner.

6. Spectromètre imageur selon une quelconque des revendications 1 à 5, dans lequel n prismes (11, 13, 28) et n-1 miroirs (12, 28) disposés dans le parcours optique entre ces prismes, de préférence 3 prismes et deux miroirs, sont disposés dans une configuration Offner.

7. Spectromètre imageur selon une quelconque des revendications 1 à 6, dans lequel deux prismes (11, 13) et un miroir (31) et deux moyens de réflexion (29, 30) conçus en tant que des éléments de dispersion sont disposés dans une configuration Offner.

8. Spectromètre imageur selon une quelconque des revendications 1 à 6, dans lequel, vu en sens radial de la courbure, ledit moyen de réflexion (12; 28) est écarté de la ligne par une plus petite distance que ledit moyen de dispersion.

9. Spectromètre, en particulier pour la télédétection à distance, comprenant un télescope et un spectromètre imageur selon une quelconque des revendications 1 à 8.

10. Spectromètre selon la revendication 9, comprenant au plus un détecteur de matrice pour la détection spectralément sensitive de l'image.
